# EUROPÄISCHE PATENTSCHRIFT

(11) **EP 3 946 722 B1**
(45) Veröffentlichungstag und Bekanntmachung des Hinweises auf die Patenterteilung: **26.04.2023**
(21) Anmeldenummer: 20714578.0
(22) Anmeldetag: 25.03.2020
(51) Int. Cl.: B01J 20/32, C02F 1/68, C02F 101/20

(54) **VERFAHREN ZUR RÜCKGEWINNUNG VON METALLIONEN AUS INDUSTRIEABWASSER SOWIE DIESBEZÜGLICHE VERWENDUNG EINES KOMPLEXIERUNGSMITTELS**
METHOD FOR RECOVERING METAL IONS FROM INDUSTRIAL WASTE WATER, AND THEREWITH ASSOCIATED USE OF A COMPLEXING AGENT
PROCÉDÉ DE RÉCUPÉRATION D'IONS MÉTALLIQUES DANS DES EAUX USÉES INDUSTRIELLES AINSI QUE L'UTILISATION ASSOCIÉE D'UN AGENT COMPLEXANT

(30) Priorität: 04.04.2019 DE 102019108803
(43) Veröffentlichungstag der Anmeldung: 09.02.2022
(73) Patentinhaber: Helmholtz-Zentrum Dresden - Rossendorf e.V., 01328 Dresden (DE)
(72) Erfinder: JAIN, Rohan, 01328 Dresden (DE); JOSHI, Tanmaya, 01328 Dresden (DE); POLLMANN, Katrin, 01328 Dresden (DE)
(74) Vertreter: Kailuweit & Uhlemann Patentanwälte Partnerschaft mbB
(86) Internationale Anmeldenummer: PCT/EP2020/058373
(87) Internationale Veröffentlichungsnummer: WO 2020/200961

(56) Entgegenhaltungen:
- US-A1- 2012 061 325
- US-B2- 6 432 313
- RENARD G ET AL: "Immobilisation of a biological chelate in porous mesostructured silica for selective metal removal from wastewater and its recovery", NEW J. CHEM,, Bd. 29, 1. Januar 2005 (2005-01-01), Seiten 912-918, XP002791219, DOI: 10.1039/B500302B in der Anmeldung erwähnt
- TAKAGAI Y ET AL: "Adsorption behaviors of high-valence metal ions on desferrioxamine B immobilization nylon 6,6 chelate fiber under highly acidic conditions", JOURNAL OF COLLOID AND INTERFACE SCIENCE, ACADEMIC PRESS,INC, US, Bd. 313, Nr. 1, 1. September 2007 (2007-09-01), Seiten 359-362, XP026043362, ISSN: 0021-9797, DOI: 10.1016/J.JCIS.2007.02.079 [gefunden am 2007-07-19] in der Anmeldung erwähnt

## Beschreibung

Die vorliegende Erfindung betrifft die Immobilisierung von Komplexbildnern an Harzen und ein Verfahren zur Rückgewinnung von Metallen aus Industrieabwässern mit Hilfe solcher immobilisierter Komplexbildner.

Aus dem Stand der Technik bekannte Prozesse zur Rückgewinnung von Metallen aus Industrieabwässern, wie Lösungsmittelextraktion, lonenaustausch, fraktionierte Präzipitierung oder elektrochemische Abscheidung haben nachteilig keine hohe Wiederverwendbarkeit bzw. sind schwierig abzutrennen, was eine Wiederverwendung aufwendig macht.

### Eine Methode zur Wahl ist die Immobilisierung von Komplexbildnern auf einem Harz

Renard et al. (2005) immobilisierten Siderophore des Typs Pyoverdin auf großporigem Siliziumbasiertem MTS (micelle-templeated silicas) und einem Glycidoxypropyl-Linker. Sie erhielten so einen leicht recyclebaren "Metallschwamm". Die Komplexierung wurde lediglich mit Eisen und bei hohen Metallkonzentrationen (40mg/mL) getestet. Die resultierten Pyoverdin-Silica-Moleküle haben eine Beladung von durchschnittlich 36,5 µmol Pyoverdin pro g Trägersubstanz, was im Falle von Eisen zu einer maximalen Komplexierungskapazität des Harzes von 2mg Fe pro g Trägermaterial führt.

Bei dieser Immobilisierung der Pyoverdine auf Silizium-Partikeln konnte nur eine sehr geringe Beladung erreicht werden. Unter Annahme, dass ein Pyoverdin ein Fe³⁺-Ion komplexiert (1:1), kann damit nur eine sehr geringe Komplexierungskapazität von 2.5mg Eisen pro g Trägermaterial erreicht werden. Für eine Anwendung im großen Maßstab würden damit viel zu große Mengen an Trägermaterial benötigt werden.

Roosen et al. (2017) beschreiben die Immobilisierung der beiden niedermolekularen Komplexbildner 8-Hydroxyquinoline und 8-Hydroxyquinaldin an Chitosan-Silica-harzen zur Rückgewinnung von Ga(III) bzw. Al(III) aus stark alkalischen Modell-Abwasserlösungen (synthetische Bayer-Lösungen). Es bilden sich vorrangig Komplexe mit Al(III) und die Methode ist nicht geeignet, um beispielsweise selektiv Gallium abzutrennen. Es wurden lediglich stark basische Lösungen untersucht (ca. pH > 8). Die Kapazität betrug (fürGa) 61,3mg/g (0,88mmol/g) bzw. 38,3mg/g (0,55mmol/g).

Generell sind alle vorhandenen Methoden nur für hohe Konzentration von Metallen (>40mg/L) anwendbar. Keine der vorhandenen Methoden eignet sich für stark verdünnte Industrieabwässer, d.h. bei denen der Gehalt des zurückzugewinnenden Metalls bei <40mg/L liegt.

Schwabe et al. (2018) offenbarten die Immobilisierung von Desferrioxaminen an "mesocellular sillica" und testeten die Komplexierung von Metallen im Konzentrationsbereich 3-100µmol/L. Das entspricht für Gallium beispielsweise einer Konzentration von 0,2-7mg/L. Die Wiederverwendbarkeit der Siderophore wurde erhöht.

Takagai et al. (2007) immobilisierten das Siderophor Desferrioxamin B (DFO-B) auf Nylon-6,6 und untersuchten die Komplexierung verschiedener Metalle mittels anschließender Lösungsmittelextraktion. Es wird nahegelegt, dass die Selektivität durch Limitierung der Freiheitsgrade des DFO-B durch chemische Immobilisierung erreicht werden kann.

Für das quantitativ adsorbierte Zirkonium ergibt sich nachteilig lediglich eine Komplexierungskapazität von 1,2mg Zirkonium pro g Adsorber (berechnet aus 13,5µmol/g). Nachteilig ist auch, dass die Immobilisierung nur mittels Templatmethode realisiert werden konnte, d.h. dass zuerst ein Komplex aus beispielsweise Eisen und dem DFO-B gebildet werden musste um anschließend davon ausgehend das Polymer zu bilden. Diese Polymerisation (bei Nylon an der Phasengrenzfläche) bei vorgebildetem Komplex führt zu wenig homogenen Produkten. Es wird aufgeführt, dass ohne diese Templatmethode allerdings noch wesentlich mehr Nebenreaktionen auftreten. Ein weiterer Nachteil ist, dass Nylon-6,6 selbst zahlreiche organische Moleküle bindet, die auch in Industrieabwässern vorhanden sind.

Yehuda et al. (2012) offenbarten in Zusammenhang mit Pflanzenbiologie die Immobilisierung der beiden Siderophore DFO-B und ethylendiaminbis(o-hydroxyphenyl-Essigsäure) an Sepharose (vernetzter Agarose). Weitere relevante Dokumente sind US 6 432 313 B2 und US 2012/061325 A1.

Keine der Methoden offenbart einen gut wiederverwendbaren Komplexbildner mit entsprechend niedrigem Aktivitätsverlust pro Zyklus. Die erreichten Beladungen bzw. Komplexierungskapazitäten sind zu klein.

Aufgabe der Erfindung ist es, ein Trägermaterial bereitzustellen, an welchem Siderophore immobilisiert sind. Die Siderophore sollen beweglich aber kovalent an dem Trägermaterial gebunden sein.

Diese mit Siderophoren immobilisierte Trägermaterial soll zur Komplexierung von Metallionen geeignet sein. Insbesondere sollen damit Metallionen aus Industrieabwässern zurückgewonnen werden können. Die Verbindung soll dergestalt sein, dass die Siderophore genügend Flexibilität haben, um zur Metallkomplexierung "zur Verfügung zu stehen", aber dass gleichzeitig die Beladung des Trägermaterials mit Siderophor hoch ist. Damit die verwendeten Siderophore sparsam genutzt werden, sollen alle Siderophor-Moleküle am Trägermaterial für Metallionen gut erreichbar sein. Eine generelle Anforderung ist, dass die Mittel zur Immobilisierung (beispielsweise Verlängerungen, Verzweigungen, funktionelle Gruppen) die Metallkomplexierung nicht negativ beeinflussen. Der Aktivitätsverlust soll gering sein. D.h. das mit Siderophoren immobilisierte Trägermaterial soll eine gute Wiederverwendbarkeit aufweisen.

Im Zusammenhang mit der Beladung mit Siderophor soll die Komplexierungskapazität hoch sein. Am Beispiel Eisen soll es höher sein als 2.5mg Fe pro Gramm Trägermaterial

Die Erfindung soll auch bei geringen Konzentrationen der verschiedenen Metalionen funktionieren, d.h. bei ≤ 40mg/L, insbesondere bei ≤1mg/L.

Die Aufgabe wird gelöst durch die Erfindung, welche durch die unabhängigen Patentansprüche beschrieben ist. Bevorzugte Ausführungsformen werden durch die abhängigen Patentansprüche verdeutlicht.

Gegenstand der Erfindung ist ein Verfahren zur Rückgewinnung von Metallionen aus Industrieabwasser durch:
- Kontaktieren des Industrieabwassers mit Siderophoren, wobei sich ein Metallionen-Siderophor-Komplex bildet,

dadurch gekennzeichnet, dass
die Siderophore über eine Linker kovalent an einem Trägermaterial immobilisiert sind,
wobei der Linker eine Polyethylenglykol-Kette enthält,
wobei der Linker eine Masse von 2000-3500 Da aufweist.
Beim erfindungsgemäßen Kontaktieren des Industrieabwassers kommt es zur Komplexierung der Metallionen mit den Siderophoren.

Die genannte Masse des Linkers entspricht in etwa einer Länge von 45 bis 80 Ethylenglykol-Wiederholeinheiten.

Auch Gegenstand der Erfindung ist die Verwendung eines Komplexierungsmittels zur Rückgewinnung von Metallionen aus Industrieabwasser, wobei das Komplexierungsmittel ein Trägermaterial aufweist, an dem Siderophore über einen Linker kovalent immobilisiert sind und wobei der Linker eine Polyethylenglykol-Kette enthält.

Die Masse des Linkers kann durch Abbau der Linker vom Trägermaterial und Abbau des Siderophors und anschließender Größenausschlusschromatographie gekoppelt mit Lichtstreudetektor bestimmt werden, wobei das Maximum des Molmassenverteilungspeaks betrachtet wird. Im erfindungsgemäßen "Verfahren zur Immobilisierung von Siderophoren..." wird die Molmasse sinnvollerweise noch vor der kovalenten Anbindung der Linker bestimmt.

Je nach Herstellungsprozess kann der Linker an der Stelle, an der Siderophor und Linker kovalent verknüpft sind, weitere Gruppen aufweisen, die der Immobilisierung des Siderophors, insbesondere der chemischen Reaktion, dienen (beispielsweise Reste von Kupplungs- oder Aktivierungsreagenzien).

Im Sinne der Erfindung wird das Trägermaterial mit den über einen Linker immobilisierten Siderophoren Komplexierungsmittel genannt.

Vorteilhaft ist, dass aufgrund der beschriebenen Ausgestaltung der Linker des Komplexierungsmittels die Siderophore beweglich und dennoch fest über kovalente Bindungen am Trägermaterial immobilisiert sind.

Es ergibt sich vorteilhaft eine dichte Packung der Linker mit Siderophor um das Trägermaterial herum. Die Linker sind flexible genug, um die relativ großen Siderophor-Moleküle während der Immobilisierung zu erreichen. In Kombination mit der Masse, d.h. auch mit der Länge, des Linkers haben sich in dieser Form optimale Bedingungen für die Immobilisierung der Siderophore an einem Trägermaterial ergeben.

Vorteilhaft ist im erfindungsgemäßen Verfahren das Komplexierungsmittel nicht sensitiv sondern stabil gegenüber Säuren und Basen. Vorteilhaft ist es möglich, verschiedene Siderophore, die sich alle in Ihrer Struktur relativ stark unterscheiden, zu immobilisieren. Der Träger mit dem beschriebenen Linker zusammen sind also universell für die Immobilisierung verschiedenster Siderophore einsetzbar.

Anders als bei bekannten Komplexierungsmitteln aus Matrix (Trägermaterial/Harz) und Chelator (daran immobilisiert) wird im hier beschriebenen Komplexierungsmittel die Struktur des Siderophors (Chelator) nicht durch die Immobilisierung am Trägermaterial beeinflusst. Die Kapazität der Metallkomplexierung wird damit nicht negativ beeinflusst.

Ein Vorteil ist, dass die Erfindung zur Komplexierung verschiedener Metallionen wie beispielsweise auch Indium, Gallium, Germanium bzw. Scandium, geeignet ist. Insbesondere ist sie geeignet, um solche Metallionen aus Industrieabwässern zurückzugewinnen.

Es hat sich gezeigt, dass das Verfahren auch für geringen Metallionenkonzentrationen von ≤40mg/L bis zu ca. 0,1mg/L funktioniert, insbesondere geringe Konzentrationen an Gallium.

Überraschenderweise hat sich auch gezeigt, dass das Komplexierungsmittel druckresistent ist. Das Verfahren ist damit anwendbar in Batchverfahren und auch in kontinuierlichen Verfahren, insbesondere in kontinuierlichen Durchfluss-Verfahren in Rohren bzw. Leitungen, die meist unter hohem Druck durchgeführt werden.

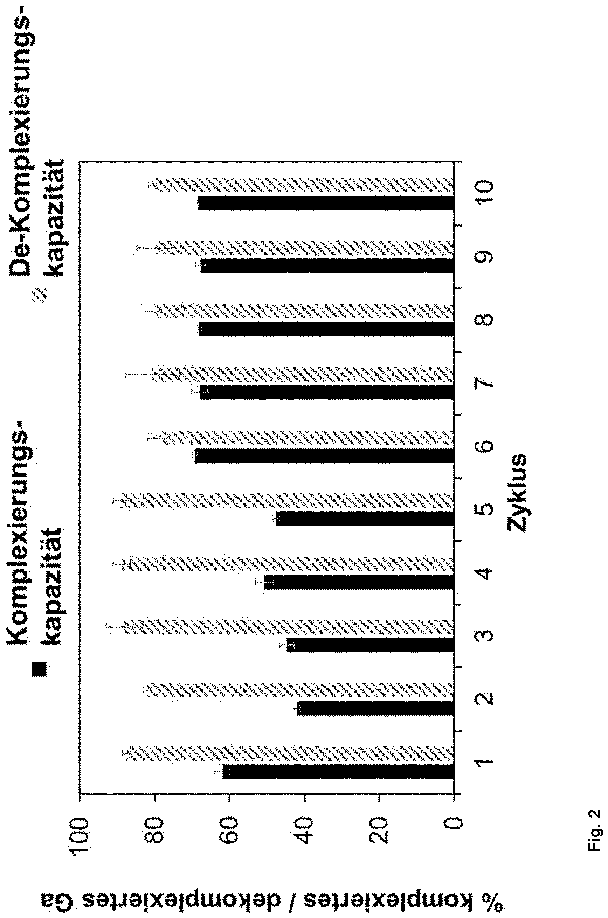

Ein Vorteil ist auch, dass der Aktivitätsverlust des Komplexierungsmittels im Verfahren sehr gering ist (kein messbarer Aktivitätsverlust nach 10 Komplexierungs-Dekomplexierungs-Zyklen), insbesondere bei echten Industrieabwässern und nicht nur bei synthetischen, d.h. Modell-Industrieabwässern. Folglich ändert sich die chemische Struktur innerhalb des verwendeten Komplexierungsmittels kaum, d.h. es finden keine Nebenreaktionen statt und eine Abspaltung immobilisierter Siderophore findet offenbar nicht statt. Der Aktivitätsverlust über 10 Zyklen berechnet sich mittels Vergleich der komplexierten Menge der Metallionen im 1. Zyklus mit der im 10. Zyklus. Verdeutlicht wird das beispielsweise in Fig. 2.

In diesem Zusammenhang ist das Verfahren mit dem gleichen Komplexierungsmittel oft wiederholbar und das Komplexierungsmittel oft wiederverwendbar.

Die Komplexierungskapazität des hier beschriebenen Komplexierungsmittels ist hoch, insbesondere liegt sie im Bereich von 3 bis 15 mg pro g Trägermaterial.

Ein weiterer Vorteil ist, dass das Verfahren geeignet ist, Metallionen aus Lösungen zu komplexieren, die pH 2,5-9,0 besitzen, insbesondere 2,5-4,0. Solche sauren Industrieabwässer sind sehr häufig anzutreffen.

Vorteilhaft ist auch, dass kein organisches Lösungsmittel im erfindungsgemäßen Verfahren nötig ist. D.h. man kann auf umweltschädigende Lösungsmittel wie beispielsweise Acetonitril verzichten. Die Kosten sind daher ungefähr 3 mal geringer als bei konventionellen chromatographischen Methoden der Metallrückgewinnung.

Zur Freisetzung der Metallionen wird das erfindungsgemäße Verfahren mit bekannten Methoden aus dem Stand der Technik kombiniert, wie beispielsweise der Dekomplexierung der Metallionen mittels zugegebenen EDTA (Ethylendiamintetraessigsäure).

Bevorzugt wird im erfindungsgemäßen Verfahren in einem Schritt der gebildete Metallionen-Siderophor-Komplex abgetrennt. Dabei wird zuvor eine für die Metallkomplexierung übliche Zeit eingehalten, damit sich der Komplex bilden kann. Diese Abtrennung des aufgrund der Immobilisierung am Trägermaterial festen Metallionen-Siderophor-Komplexes kann mit bekannten Methoden stattfinden, wie beispielsweise Abdekantieren der überstehenden Lösung, Filtration des festen Komplexes etc.

In einer bevorzugte Ausführungsform der Erfindung ist das Siderophor Desferrioxamin-B.

In einer bevorzugten Ausführungsform der Erfindung ist das Trägermaterial ein Polystyrol-Harz. Vorteilhaft gegenüber beispielsweise anorganischen Trägermaterialien, wie Silica-basierten Harzen ist, dass Polystyrol als organische Verbindung eine größere Flexibilität besitzt, was die Immobilisierung mit Siderophoren erleichtert. Polystyrol ist weit verbreitet, kommerziell erhältlich, kostengünstig und, sobald auch die Doppelbindungen abreagiert sind, so unreaktiv, dass im verwendeten Komplexierungsmittel keinerlei Nebenreaktionen mehr auftreten. Dennoch ist die Hydrophobizität des Polystyrols durch den hydrophilen Linker so stark "überdeckt", dass das Komplexierungsmittel in wässrigen Lösungen, insbesondere industrieabwässern, angewendet werden kann. D.h. das Komplexierungsmittel ist amphiphil.

In einer ebenfalls bevorzugten Ausführungsform er Erfindung ist beim Komplexierungsmittel das Siderophor über eine Amidbindung mit dem Linker verbunden. Siderophor und Linker bilden dabei gemeinsam eine Amidbindung aus.

Diesbezüglich ist in einer Variante dieserAusführungsform ein Siderophor mit dessen NH₂Gruppe über eine endständige COOH-Gruppe des Linkers kovalent gebunden.

In einer anderen Variante der Ausführungsform ist dagegen eine COOH-Gruppe des Siderophors mit einer endständigen NH₂-Gruppe des Linkers kovalent gebunden, ebenfalls in Form einer Amidbindung

In einer anderen Ausführungsform der Erfindung wird das Siderophor über eine endständige NH₂-Gruppe des Linkers kovalent immobilisiert. In dieser Ausführungsform reagiert dann entsprechend besonders bevorzugt eine COOH-Funktion des Siderophors mit dieser endständigen NH₂-Gruppe des Linkers.

In einer Ausführungsform weist der Linker an dem zum Siderophor gerichteten Ende einen zusätzlichen Spacer auf. Der Spacer hat bevorzugt die chemische Struktur -Et-NHCO-Et-, wobei an einer Seite die PEG-Kette und an der anderen Seite das Siderophor anschließt.

In einer bevorzugten Ausführungsform der Erfindung ist die Polytheylenglykol-Kette mindestens 30 Widerholeinheiten lang, insbesondere mindestens 35, besonders bevorzugt mindestens 40.

Insbesondere ist die idealisierte Struktur des Trägermaterials mit Linker, der zusätzlich einen Spacer aufweist, die folgende:
~~~Ph-**PEG**-Et-NHCO-Et-CO-Siderophor
wobei ~~~Ph für ein Polystyrol-Harz als Trägermaterial steht.

Bevorzugt wurde dieser Verbindung hergestellt aus ~~~Ph-**PEG**-Et-NHCO-Et-COOH, an das ein Siderophor an die COOH-Gruppe angeknüpft wurde.

In dieser Ausführungsform enthält der Linker des Komplexierungsmittels neben der Polyethylenglykol-Kette noch einen Et-NHCO-Et-Spacer. Zusammen ist die Länge bzw. Masse 2000-3500Da oder 2000-3500 g/mol.

In einer bevorzugten Ausführungsform der Erfindung sind die Siderophore ausgewählt aus Desferrioxaminen, Petrobactin, Heterobactin, Staphylofferin A, Marinobactinen, Aquachelinen, Amphibactinen, Ochrobactinen, Coprogenen, Neocoprogenen, Triornicin, Isotriornicin, Moanachelinen, Agrobactin, Parabactin, Fluvibactin, Carboxymycobactinen, Pyoverdinen, Ornibactinen, Azoverdin, Azotobactin, Loihichelinen, Aerobactin, Nannochelinen, Mugineinsäuren, Alterobactinen, Fusarinine A, Exochelin MN, Ornicorrugatin, Alcaligin, Bisucaberin, Azotochelin, Myxochelin, Amonabactin T789, Amonabactin P750, Chrysobactin, Aminochelin, Siderochelin A, Aspergillsäure, N-2,3-dihydroxy-benzoylglycin (Itoic acid), Ferrimycin, Salmycin A und Synechobactinen und deren Salze.

Marinobactine sind insbesondere Marinobactine A, B, C, D1, D2 und E.

Coprogene sind insbesondere Coprogen, Coprogen B (Desacetylcoprogen), Dimethylcoprogen, Hydroxycoprogen und Palmitoylcoprogen.

Neocoprogene sind insbesondere Neocoprogen II, Dimethylneocoprogen I, Hydroxyneocoprogen I und Hydroxyisoneocoprogen I.

Triornicin umfasst insbesondere auch Dimethyltriornicin.

Moanacheline sind insbesondere Moanachelin gly-B, Moanachelin ala-B, Moanachelin gly-D, Moanachelin ala-D und Moanachelin gly-E.

Pyoverdinen sind insbesondere die mit 6-12 Aminosäuren im Rückgrat.

Ornibactine sind insbesondere Ornibactin - C4, Ornibactin - C6 und Ornibactin - C8.

Azotobactin ist insbesondere Azotobactin 87 und Azotobactin D.

Aquacheline sind insbesondere Aquachelin A, Aquachelin B, Aquachelin C, Aquachelin D, Aquachelin I und Aquachelin J.

Loihicheline sind insbesondere Loichelin A, B, C, D, E und F.

Nannocheline sind insbesondere Nanochelin A, B und C.

Mugineinsäuren sind insbesondere Mugineinsäure, 3-Hydroxymugineinsäure und 2-Deoxymugineinsäure.

Alterobactine sind insbesondere Alterobactin A und B sowie Pseudoalterobactin A und B.

Besonders bevorzugt sind die Siderophore ausgewählt aus Desferrioxamin B, Petrobactin, Staphylofferin A, Marinobactinen, Aquachelinen, Amphibactinen, Ochrobactinen und Synechobactinen.

In einer bevorzugten Ausführungsform der Erfindung liegt die Beladung des Trägermaterials mit Siderophor im Bereich von 0,05 bis 0,1 mmol Siderophor pro Gramm Trägermaterial, besonders bevorzugt 0,075 bis 0,095 mmol pro g, insbesondere bei 0,085mmol pro g.

In einer bevorzugten Ausführungsform des erfindungsgemäßen Verfahrens zur Rückgewinnung von Metallionen aus Industrieabwasser und der Verwendung eines Komplexierungsmittels zur Rückgewinnung von Metallionen aus Industrieabwasser liegt der pH-Wert bei dem Kontaktieren, d.h. der Komplexierung, im Sauren, beispielsweise bei <5, besser bei 2,0 bis 4,5, insbesondere bei 2,5 bis 4,0, besser bei 2,5 bis 3,5, besonders bevorzugt bei 2,5 bis 2,9.

In einer bevorzugten Ausführungsform der Erfindung sind die Metallionen, die zurückgewonnen werden sollen, ausgewählt aus Gallium, Indium, Germanium und Scandium, insbesondere aus Ga³⁺, In³⁺, Ge⁴⁺ und Sc³⁺, besonders bevorzugt aus Ga, insbesondere ist es Ga³⁺. Entsprechend enthält in dieser Variante das verwendete Industrieabwasser mindestens eines dieser Metallionen. Vorteil dieser Ausführungsform ist, dass diese Metalle bevorzugt vor anderen Metallen komplexiert und somit zurückgewonnen werden können.

In einer bevorzugten Ausführungsform der Erfindung liegt bei der erfindungsgemäßen Rückgewinnung von Metallionen aus Industrieabwasser mit Hilfe des beschriebenen Komplexierungsmittels die Konzentration der Metallionen in dem Industrieabwasser vor Verwendung des Komplexierungsmittels bei maximal 40mg/L, besonders bevorzugt bei maximal 1mg/L, insbesondere ist sie nicht kleiner als 0,1mg/L. Bevorzugt ist die Konzentration dabei die von Gallium, das vorteilhaft selektiv neben weiteren Metallen komplexiert und zurückgewonnen werden kann. In einer bevorzugten Ausführungsform des erfindungsgemäßen Verfahrens und der erfindungsgemäßen Verwendung liegt der pH des Industrieabwassers beim Kontaktieren bzw. Komplexieren bei 2,5 bis 2,9 (wenn vorrangig Gallium rückgewonnen werden soll), bei 2,9 bis 3,2 (wenn vorrangig Indium rückgewonnen werden soll), bei 2,5 bis 4,5 (wenn vorrangig Germanium rückgewonnen werden soll) bzw. bei 2,5 bis 3,5 (wenn vorrangig Scandium rückgewonnen werden soll).

In einer bevorzugten Ausführungsform des erfindungsgemäßen "Verfahrens zur Immobilisierung von Siderophoren an einem Trägermaterial..." findet das Verfahren im wässrigen Milieu statt.
Fig. 1 zeigt das beispielhafte Reaktionsschema der Immobilisierung eines Siderophoren an einem Trägermaterial, wobei der als ~~~~~ angedeutete Linker die Polyethylenglykol-Kette enthält.
Fig. 2 zeigt die Entwicklung von Komplexierungs- und Dekomplexierungskapazität eines verwendeten Komplexierungsmittels über mehrere Zyklen.
Fig. 3 zeigt die Selektivität der Indium-Rückgewinnung in Abhängigkeit von dem Verhältnis des enthaltenen Indiums zu den weiter enthaltenen Metallen Mg, Ca, Cu bzw. Zn.
Fig. 4 zeigt die Abhängigkeit der Indium-Rückgewinnung von dem pH-Wert des verwendeten Industrieabwassers.

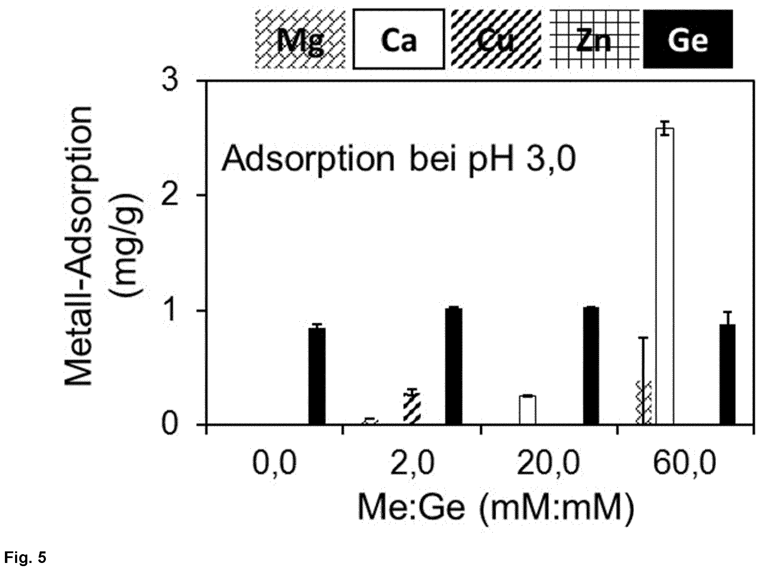

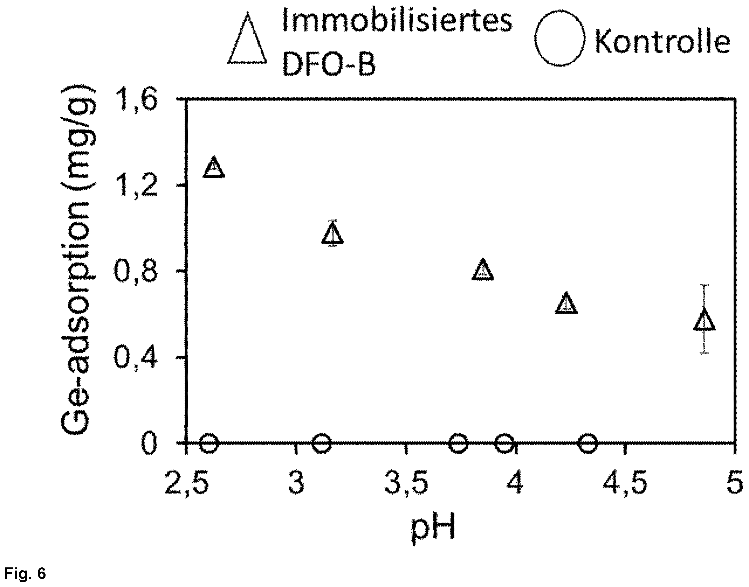

Fig. 5 und 6 zeigen dies entsprechend für Germanium.

Komplexierungskapazität ist der Anteil von komplexierten Metallionen an den zuvor im Industrieabwasser vorliegenden Metallionen gleicher Art. Die Dekomplexierungskapazität dagegen ist das Verhältnis von freigesetzter Menge zu zuvor komplexierter Menge.

Alle einzelnen Ausführungsformen der Erfindung können in beliebiger Art und Weise miteinander kombiniert werden.

Das Projekt, das zu dieser Patentanmeldung geführt hat, wurde gefördert durch das Programm Horizon 2020 (Forschungs- und Innovationsprogramm der Europäischen Union) - Marie Sklodowska-Curie Fördervereinbarung Nr. 704852.

Die folgenden Beispiele verdeutlichen die Erfindung ohne sie auf diese zu beschränken.

### Beispiel 1:

In diesem Versuch sollte ein Polystyrol-Harz, welches direkt an den Phenyl-Gruppen des polymerisierten Styrols jeweils eine COOH-Gruppe trägt, mit Siderophoren immobilisiert werden. Das Polystyrol-Harz hat auszugsweise die Struktur:

### ~~~PH-COOH

Verwendet wurde das Material mit der Artikelnummer H10008 der Rapp Polymere GmbH (Partikelgröße 100-200 mesh, d.h. ca 149-74µm, Kapazität 1,0-1,8mmol/g).

Es war nicht möglich, kovalent das Siderophor Desferrioxamin-B an das Harz zu binden. Als Versuchsvorschrift wurde die, in Ausführungsbeispiel 3a angewendet.

### Beispiel 2:

In diesem Versuch sollte ein Polystyrol-Harz, welches zwischen den Phenyl-Gruppen des polymerisierten Styrols und den endständigen COOH-Gruppen jeweils eine Verlängerung trägt, mit Siderophoren immobilisiert werden.

Das Polystyrol-Harz hat auszugsweise die Struktur:

### ~~~Ph-Et-NHCO-Et-COOH

Im Vergleich zum Harz aus Vergleichsbeispiel 1 trägt es damit einen zusätzlichen "Abstandshalter" zwischen Phenyl-Gruppe und COOH-Gruppe in Form von -CH₂-CH₂-NH-CO-CH₂-CH₂-.

Verwendet wurde das Material mit der Artikelnummer HA16020003 der Rapp Polymere GmbH (Partikelgröße 160-200µm, Kapazität 0,8-1,2mmol/g).

Es war nicht möglich, kovalent das Siderophor Desferrioxamin-B an das Harz zu binden. Als Versuchsvorschrift wurde die aus Beispiel 3a angewendet.

### Beispiel 3a: Immobilisierung von Siderophor an Trägermaterial (DFO-B an Polystyrol)

In diesem Versuch sollte ein Polystyrol-Harz, welches zwischen den Phenyl-Gruppen des polymerisierten Styrols und den endständigen COOH-Gruppen, ähnlich Beispiel 2, jeweils eine Verlängerung trägt, mit Siderophoren immobilisiert werden.

Die Verlängerung enthält anstelle der Ethylgruppe an den Phenylringen des Polystyrols allerdings eine Polyethylenglykol-Kette (PEG).

Das Polystyrol-Harz mit PEG-enthaltendem Linker hat auszugsweise die Struktur:

### ∼∼∼Ph-PEG-Et-NHCO-Et-COOH

Verwendet wurde das Material mit der Artikelnummer MB160003 (Partikelgröße 140-170µm, Kapazität 0,4-0,6mmol/g). Kapazität beschreibt in diesem Zusammenhang die "Dichte der Linker", d.h. es sind 0,4-0,6mmol Linker pro g Substanz enthalten.

Der Linker umfasst hierbei -PEG-Et-NHCO-Et-CO-, so dass neben der Polyethylenglykol-Kette in diesem Ausführungsbeispiel noch Reste mit 127g/mol umfasst sind, das sind die Ethyl-Gruppe, die NHCO-Gruppe, noch eine Ethyl-Gruppe und C=O, welche direkt an das Siderophor bindet.

Diese Verbindung wurde mit dem Siderophoren Desferioxamin-B (DFO-B) schrittweise unter Zuhilfenahme der Kupplungsreagenzien EDC (1-ethyl-3-(3-dimethylaminopropyl)carbodiimid-hydrochlorid) und sulfo-NHS (N-Hydroxysulfosuccinimid-Natriumsalz) anhand folgender Vorschrift umgesetzt:
In einem Glasgefäß werden das Polystyrol-basierte Harz TentaGel^{®} MB-COOH (243mg, 0,52mmol/g, von Rapp Polymere, Produktnummer MB160003) vorgelegt. Das Harz wird aufgequollen in 0,1M MES-Puffer (2-(N-Morpholino)ethansulfonsäure) (pH 6,0) für 30 Minuten. Danach werden EDC (96mg, 0,50mmol) und sulfo-NHS (57mg, 0,25mmol) zugegeben. Die Mischung wird 1h bei Raumtemperatur (25°C) gerührt. Desferrioxamin-B-mesylat (166mg, 0,25mmol) gelöst in Phosphat-Puffer (10mM, pH 7, 3mL) werden tropfenweise hinzugefügt. Nach weiterem Rühren für 2h bei Raumtemperatur wurde die Kupplung wiederholt und die gleichen Mengen der Reagenzien EDC, sulfo-NHS und Desferrioxamin-B-mesylat zugegeben (Desferrioxamin-B-mesylat gelöst in 2mL 10mM Phosphat-Puffer, pH 7,0). Nunmehr wird für 16h bei Raumtemperatur gerührt. Das Harz wird abfiltriert und mit doppelt destilliertem Wasser gewaschen (4 × 30mL), danach mit Methanol (50mL) und Aceton (50mL). Zuerst wird das Harz 2h an der Luft getrocknet und später unter Hochvakuum. Das mit Desferrioxamin-B immobilisierte Harz wird bei -18°C gelagert.

Es war hier nun möglich, kovalent das Siderophor Desferrioxamin-B an das Harz zu binden.

Es resultiert ein Komplexierungsmittel der allgemeinen Struktur
~~~Ph-**PEG**-Et-NHCO-Et-CO-Siderophor
wobei ~~~Ph für das Polystyrol-Harz als Trägermaterial steht.

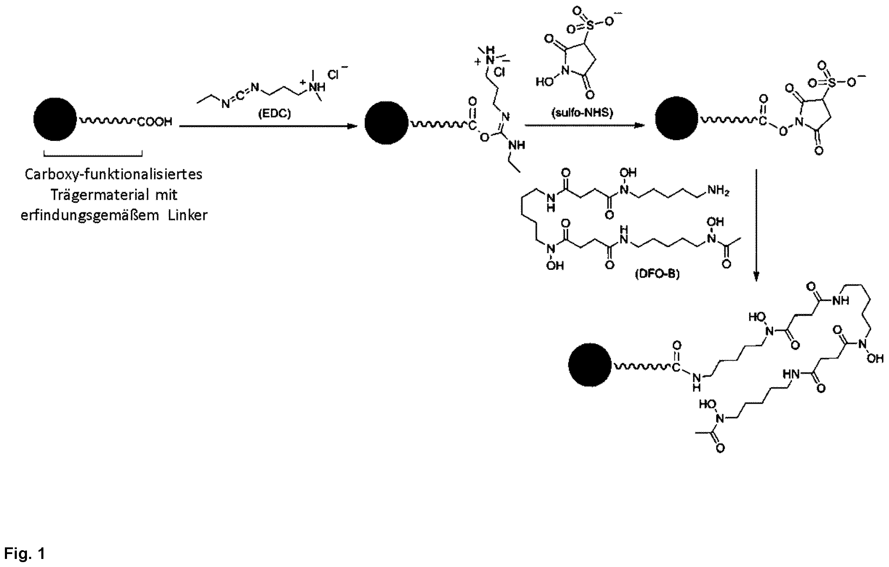

Ein beispielhaftes Reaktionsschema dieser Ausführungsform ist in Fig. 1 gezeigt, wobei der als ~~~~~ angedeutete Linker die Polyethylenglykol-Kette enthält:

### Ausführungsbeispiel 3b: Komplexierung von Ga und Untersuchung des Aktivitätsverlusts

Mit dem Komplexierungsmittel aus Beispiel 3a wurden Industrieabwasser-Proben mit Galliumionenkonzentration von ca. 1mg/L behandelt Die Galliumkonzentration der Industrieabwasser-Proben wird zuvor mittels ICM-MS bestimmt. Ein Kontrollexperiment mit Polystyrol-Harz mit Polyethylenglykol-Kette und ohne Desferrioxamin-B wurde analog durchgeführt.

Tabelle 1 zeigt die ungefähre Zusammensetzung der verwendeten Industrieabwasser-Proben anhand der Messmethode ICP-MS, die jeweils verwendet werden, und deren pH-Wert. Es sind weitere Metalle enthalten, die nicht offenbart wurden. Alle Werte bis auf den pH-Wert tragen die Einheit µg/L.

**Tabelle 1: Zusammensetzung der Industrieabwasser-Proben [µg/L] und pH**

| Nr | **pH** | Fe | As | | P | Al | **Ga** |
|---|---|---|---|---|---|---|---|
| 1 | **3,5** | <200 | <5000 | | <5000 | <200 | **1513** |
| 2 | **8,8** | <200 | <5000 | | <5000 | <200 | **1353** |

Bei der Behandlung wurden jeweils 20mg Komplexierungsmittel bzw. Kontroll-Komplexierungsmittel mit 5mL der oben aufgeführten Ga-enthaltendem Industrieabwasser-Proben (pH3,5 bzw. 8,8) umgesetzt. Nach24h Rühren bei 30°C wurde mittels 0,45µm-Filter filtriert. Mittels ICP-MS an der filtrierten Flüssigkeit wurde bestimmt, wieviel Ga durch das jeweilige Komplexierungsmittel komplexiert wurde.

### Ergebnisse:

Das Kontroll-Komplexierungsmittel hat 5-15% (bei pH 3,5 und auch bei pH 8,8) des im Industrieabwasser enthaltenen Galliums komplexiert.

Das Komplexierungsmittel aus Beispiel 3a hat dagegen 61.9 ± 2.0% (bei pH 3,5) des vorhandenen Galliums komplexiert. Bei pH 8,8 lag dieser Wert bei 56,7%± 2.0%.

Die Freisetzung des Galliums wird durch bekannte Methoden aus dem Stand der Technik erreicht. Hier wurde das Metall durch Zugabe von EDTA dekomplexiert.

### Optimierung des pH-Bereichs bei der Komplexierung

Der für die Komplexierung von Gallium mit dem in Beispiel 3a hergestellten Komplexierungsmittel optimale pH-Bereich wurde auf den Bereich 2,5 bis 2,9 bestimmt (Tabelle 2). In Tabelle 2 wurde dafür für drei verschiedene pH-Werte die mit Hilfe des Komplexierungsmittels aus Beispiel 3a jeweils komplexierte Menge Galliums gegenübergestellt zur Menge Ga, die mit einem Kontroll-Komplexierungsmittel komplexiert werden konnte. Der Faktor in Tabelle 1 stellt dieses Verhältnis dar. Es ist der Faktor, bzgl. komplexierter Menge Ga, der durch die Immobilisierung des Siderophors erreicht werden konnte, jeweils bei einem bestimmten pH-Wert.

Auch das Kontroll-Komplexierungsmittel wurde bei dem jeweiligen pH-Wert eingesetzt.

Das Kontroll-Komplexierungsmittel war gleich aufgebaut wie das Komplexierungsmittel aus Beispiel 3a (~~~Ph-**PEG**-Et-NHCO-Et-CO-**Siderophor**) jedoch ohne immobilisiertes Siderophor. Das heißt, das Kontroll-Komplexierungsmittels hat auszugsweise die Struktur ~~~Ph-**PEG**-Et-NHCO-Et-COOH)

**Tabelle 2: Versuche zur Optimierung des pH während der Komplexierung**

| **Für Gallium** | Experiment a | Experiment b | Experiment c |
|---|---|---|---|
| pH | 2,5 | 2,9 | 3,1 |
| Faktor | 7,2 | 3,5 | 1,2 |

Der Aktivitätsverlust bei der Komplexierung betrug ca. 0,1% nach 10 Komplexierungs-Dekomplexierungszyklen, wobei 1 Zyklus besteht aus Komplexierung und anschließender Dekomplexierung/Freisetzung (die Dekomplexierung wurde mit bekannten Methoden wie Fe-Zugabe gefolgt von EDTA etc. realisiert).

Für andere Metalle ergaben sich andere optimale pH-Bereiche der Komplexierung. Diese waren: für Indium 2,9-3,2 für Germanium 2,5-4,5 und für Scandium 2,5-3,5.

### Freisetzung des Ga sowie Regenerierung des Komplexierungsmittels aus Ausführungsbeispiel 3b:

Jeweils 40mg des mit Desferrioxamin-B immobilisierten Trägermaterials, das in Beispiel 3a erhalten wurde, sowie ein Kontroll-Komplexierungsmittel (Polystyrol-Harz mit Polyethylenglykol-Ketten, die Carboxy-Gruppen am Ende tragen, und ohne Siderophor) wurden jeweils in einer Mischung aus 8mL eines Industrieabwassers und 2mL ultrareinem Wasser (MQ Wasser, Milli-Q^{®}) aufgeschlämmt und 1h bei 30°C gerührt und gequollen.

8mL der überstehenden Mischung werden entnommen und die Gallium-Konzentration darin mittels ICP-MS bestimmt. Übrig bleiben 2mL mit dem festen, gequollenen Komplexierungsmittel. Zu den 2mL werden gegeben: 8mL einer EDTA-Lösung (im Bereich 0,5-1mM). Enthalten sind nun also 40mg des Komplexierungsmittels (mit oder ohne Siderophor) sowie 2mL der Mischung aus Industrieabwasser und ultrareinem Wasser und 8mL der EDTA-Lösung. Nach 1h Rühren bei 30°C werden 9,5mL des Überstands entnommen. Die Gallium-Konzentration der entnommenen Menge wird mittels ICP-MS bestimmt. Das verbliebende Komplexierungsmittel wird mit Wasser gewaschen und kann wiederverwendet werden.

Berechnung der Komplexierungskapazität und Aktivitätsverlust anhand des vorigen Ausführungsbeispiels:
Die Komplexierungskapazität in % ist der Anteil von komplexiertem Gallium zu dem zuvor im Industrieabwasser vorliegenden Gallium.

Sie lag bei 61.9 ± 2.0% bzw. 68.3 ± 0.1% in der Komplexierung in Zyklus 1 bzw. in Zyklus 10. Daran ist ersichtlich, dass das Komplexierungsmittel in 10 Zyklen offensichtlich keinen messbaren bzw. nennenswerten Aktivitätsverlust erleidet.

Die Dekomplexierungskapazität in % ist das Verhältnis von freigesetzter Menge Ga zu zuvor komplexierter Menge Ga. Sie lag bei 87,5 ± 1,0% bzw. 80,6 ± 1,0% in Zyklus 1 bzw. in Zyklus 10.

### Ausführungsbeispiel 4: Komplexierung verschiedener Metall aus zwei Industrieabwasser-Proben:

Die Versuche wurden analog den o.a. Vorschriften durchgeführt. Die EDTA-Lösung zur Dekomplexierung hatte eine Konzentration von 0,8mM. Verwendet wurden zwei verschiedene Industriewasserproben aus der Wafer-Herstellung mit einer Zusammensetzung wie in Tabelle 3 dargestellt. In beiden Fällen wurde selektiv Gallium aus den Proben zurückgewonnen.

**Tabelle 3: Zusammensetzung zweier Industriewasserproben**

| | Probe 1 | Probe 1 nach Komplexierung | Probe 2 | Probe 2 nach Komplexierung |
|---|---|---|---|---|
| pH | 3,0 | | 9,0 | |
| | | | | |
| Fe | 140,3 | 60.6 | 142,6 | 129.0 |
| Cr | <50 | <50 | <50 | <50 |
| Mn | <5 | <5 | <5 | <5 |
| Co | <1 | <1 | <1 | <1 |
| Ni | <50 | <50 | <50 | <50 |
| Co | <5 | <5 | <5 | <5 |
| Zn | <5 | <5 | <5 | <5 |
| As | 1940 | 1890 | 1600 | 1650 |
| Na | 388 | nicht bestimmt | 8153,3 | nicht bestimmt |
| Mg | 37,6 | 26.4 | 113 | 201 |
| Al | 14,6 | 15.4 | 18 | 85.7 |
| Si | <100 | <100 | <100 | <100 |
| P | 188,7 | nicht bestimmt | 4213,3 | nicht bestimmt |
| K | 568 | nicht bestimmt | 11433,3 | nicht bestimmt |
| Ca | 272 | 223 | 770 | 765 |
| Ga | 1513,3 | 497 | 1353,3 | 456 |
| Pb | <1 | <1 | <1 | <1 |

### Ausführungsbeispiel 5: Selektive Adsorption von Indium:

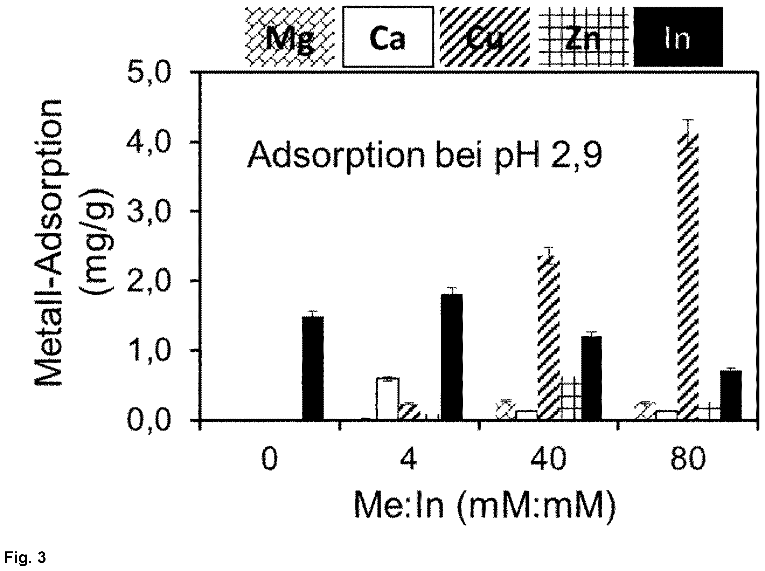

Versuche entsprechend den obigen Vorschriften zur selektiven Adsorption und Rückgewinnung von Indium wurden durchgeführt. Fig. 3 zeigt die Selektivität der Indium-Rückgewinnung in Abhängigkeit von dem Verhältnis des enthaltenen Indiums zu weiteren enthaltenen Metallen.

Selbst bei sehr geringen Indium-Konzentration im Vergleich zu höheren Konzentrationen anderer Metalle (Me) (siehe rechte Datenpunkte bei Me:ln = 80) wird Indium selektiv komplexiert, bis auf Kupfer, welches eine noch stärkere Bindungsaffinität zum Komplexierungsmittel zu haben scheint. Bis zu einem molaren Verhältnis von Me:In=4:1 wird bevorzugt Indium adsorbiert und rückgewonnen.

### Ausführungsbeispiel 6: pH-Abhängigkeit der In-Rückgewinnung

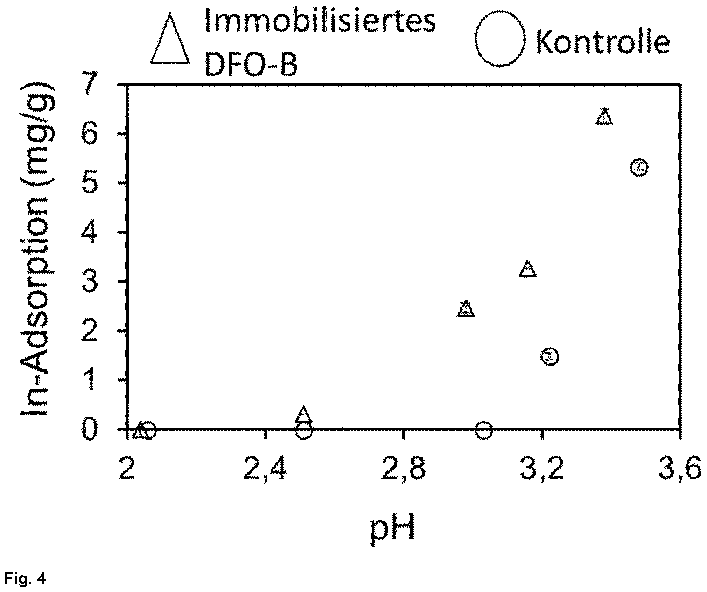

In Ausführungsbeispiel 6 wurde die Abhängigkeit der Rückgewinnung von Indium vom pH-Wert des Industrieabwassers, mit dem kontaktiert wird, untersucht. Fig. 4 zeigt dies für das Komplexierungsmittel, bei dem Desferrioxamin-B wie oben beschrieben an Polystyrol immobilisiert wurde sowie für ein Kontroll-Komplexierungsmittel ohne Desferrioxamin-B.

Das Komplexierungsmittel, an dem DFO-B immobilisiert wurde führt bei pH >4 zur ungewollten Präzipitierung. Als optimaler pH-Bereich hat sich 2,9-3,2 erwiesen.

### Ausführungsbeispiel 7: pH-Abhängigkeit der Ge-Rückgewinnung

Entsprechend Ausführungsbeispiel 6 wurde auch für Germanium die Abhängigkeit der Rückgewinnung vom pH-Wert des Industrieabwassers untersucht. Unter pH 1,5 zersetzt sich das Komplexierungsmittel und wird aufgelöst. Über pH = 5 kommt es zur ungewollten Präzipitierung. Als optimaler Bereich hat sich 2,5-4,5 erwiesen.

### Nicht-Patentliteratur

Renard, G.; Muraseanu, M.; Galarneau A.; Lerner D. A.; Brunel, D.
*Immobilisation of a biological chelate in porous mesostructured silica for selective metal*
*removal from wastewater and its recovery*
New J. Chem. 2005, 29, 912-918.
Takagai, Y.; Takahashi, A.; Yamaguchi, H.; Kubota, T.; Igarashi, S.
*Adsorption behaviors of high-valence metal ions on desferrioxamine B immobilization nylon 6,6*
*chelate fiber under highly acidic conditions*
Journal of Colloid and Interface Science 2007, 313, 359-362.
Yehuda, Z.; Hadar, Y.; Chen, Y.
*FeDFOB and FeEDDHA immobilized on Sepharose gels as an Fe sources to plants*
Plant Soil 2012, 350, 379-391.
Roosen, J.; Mullens, S.; Binnemans, K.
*Chemical immobilization of 8-hydroxyquinoline and 8-hydroxyquinaldine on chitosan-silica*
*adsorbent materials for the selective recovery of gallium from Bayer liquor*
Hydrometallurgy 2017, 171, 275-284.
Schwabe, R.; Anke, M. K.; Szymanskä, K.; Wiche, O.
*Analysis of desferrioxamine-like siderophores and their capability to selectively bind metals and*
*metalloids: development of a robust analytical RP-HPLC method*
Research in Microbiology 2018, 169, 598-607.

## Patentansprüche

1. Verfahren zur Rückgewinnung von Metallionen aus Industrieabwasser durch:
- Kontaktieren des Industrieabwassers mit Siderophoren, wobei sich ein Metallionen-Siderophor-Komplex bildet,
**dadurch gekennzeichnet, dass**
die Siderophore über eine Linker kovalent an einem Trägermaterial immobilisiert sind,
wobei der Linker eine Polyethylenglykol-Kette enthält,
wobei der Linker eine Masse von 2000-3500 Da aufweist.

2. Verfahren gemäß Anspruch 1, wobei in einem Schritt der gebildete Metallionen-Siderophor-Komplex abgetrennt wird.

3. Verfahren gemäß einem der Ansprüche 1 oder 2, wobei die Metallionen ausgewählt sind aus Indium, Gallium, Germanium und Scandium.

4. Verfahren gemäß einem der Ansprüche 1 bis 3, wobei die Siderophoren ausgewählt sind aus Desferrioxaminen, Petrobactin, Heterobactin, Staphylofferin A, Marinobactinen, Aquachelinen, Amphibactinen, Ochrobactinen, Coprogenen, Neocoprogenen, Triornicin, Isotriornicin, Moanachelinen, Agrobactin, Parabactin, Fluvibactin, Carboxymycobactinen, Pyoverdinen, Ornibactinen, Azoverdin, Azotobactin, Loihichelinen, Aerobactin, Nannochelinen, Mugineinsäuren, Alterobactinen, Fusarinine A, Exochelin MN, Ornicorrugatin, Alcaligin, Bisucaberin, Azotochelin, Myxochelin, Amonabactin T789, Amonabactin P750, Chrysobactin, Aminochelin, Siderochelin A, Aspergillsäure, N-2,3-dihydroxy-benzoylglycin, Ferrimycin, Salmycin A und Synechobactinen und deren Salze.

5. Verfahren gemäß einem der Ansprüche 1 bis 4, wobei die Beladung des Trägermaterials mit Siderophor im Bereich von 0,05 bis 0,1 mmol Siderophor pro Gramm Trägermaterial liegt.

6. Verfahren gemäß einem der Ansprüche 1 bis 5, wobei der pH-Wert bei der Komplexierung bei 2,5 bis 4,0 liegt.

7. Verwendung eines Komplexierungsmittels
aufweisend ein Trägermaterial, an dem Siderophore über einen Linker kovalent immobilisiert sind,
wobei der Linker eine Polyethylenglykol-Kette enthält,
wobei der Linker eine Masse von 2000-3500 Da aufweist.
zur Rückgewinnung von Metallionen aus Industrieabwasser.

## Claims

1. A method for recovering metal ions from industrial wastewater by:
- contacting the industrial wastewater with siderophores, a metal ion-siderophore complex forming,
**characterized in that** the siderophores are covalently immobilized on a carrier material via a linker, the linker containing a polyethylene glycol chain,
the linker having a mass of 2000-3500 Da.

2. The method according to claim 1, wherein in one step the formed metal ion-siderophore complex is separated off.

3. The method according to either claim 1 or claim 2, wherein the metal ions are selected from indium, gallium, germanium and scandium.

4. The method according to any of claims 1 to 3, wherein the siderophores are selected from desferrioxamines, petrobactin, heterobactin, staphylofferin A, marinobactins, aquachelins, amphibactins, ochrobactins, coprogens, neocoprogens, triornicin, isotriornicin, moanachelins, agrobactin, parabactin, fluvibactin, carboxymycobactins, pyoverdines, ornibactins, azoverdin, azotobactin, loihichelins, aerobactin, nannochelins, mugineic acids, alterobactins, fusarinine A, exochelin MN, ornicorrugatin, alcaligin, bisucaberin, azotochelin, myxochelin, amonabactin T789, amonabactin P750, chrysobactin, aminochelin, siderochelin A, aspergillic acid, N-2,3- dihydroxy-benzoylglycine, ferrimycin, salmycin A and synechobactins, and the salts thereof.

5. The method according to any of claims 1 to 4, wherein the loading of the carrier material with siderophore is in the range from 0.05 to 0.1 mmol of siderophore per gram of carrier material.

6. The method according to any of claims 1 to 5, wherein the pH during the complexation is 2.5 to 4.0.

7. A use of a complexing agent comprising a carrier material on which siderophores are covalently immobilized via a linker,
the linker containing a polyethylene glycol chain,
the linker having a mass of 2000-3500 Da,
for recovering metal ions from industrial wastewater.

## Revendications

1. Procédé destiné à la récupération d'ions métalliques à partir d'eaux usées industrielles par :
- la mise en contact des eaux usées industrielles avec des sidérophores, un complexe ions métalliques-sidérophores étant formé,
**caractérisé en ce que** les sidérophores sont immobilisés de manière covalente sur un matériau de support par l'intermédiaire d'un lieur, dans lequel le lieur contient une chaîne de polyéthylène glycol,
dans lequel le lieur présente une masse de 2 000 à 3 500 Da.

2. Procédé selon la revendication 1, dans lequel, dans une étape, le complexe ions métalliques-sidérophores formé est séparé.

3. Procédé selon l'une des revendications 1 ou 2, dans lequel les ions métalliques sont choisis parmi l'indium, le gallium, le germanium et le scandium.

4. Procédé selon l'une des revendications 1 à 3, dans lequel les sidérophores sont choisis parmi les déféroxamines, la pétrobactine, l'hétérobactine, la staphyloférrine A, les marinobactines, les aquachélines, les amphibactines, les ochrobactines, les coprogènes, les néocoprogènes, la triornicine, l'isotriornicine, les moanachélines, l'agrobactine, la parabactine, la fluvibactine, les carboxymycobactines, les pyoverdines, les ornibactines, l'azoverdine, l'azotobactine, les loihichélines, l'aérobactine, les nannochélines, les acides muginiques, les altérobactines, la fusarinine A, l'exochéline MN, l'ornicorrugatine, l'alcaligine, la bisucabérine, l'azotochéline, la myxochéline, l'amonabactine T789, l'amonabactine P750, la chrysobactine, l'aminochéline, la sidérochéline A, l'acide aspergillique, la N-2,3-dihydroxy-benzoylglycine, la ferrimycine, la salmycine A et les synéchobactines et leurs sels.

5. Procédé selon l'une des revendications 1 à 4, dans lequel la charge de sidérophores sur le matériau de support se situe dans la plage de 0,05 à 0,1 mmol de sidérophores par gramme de matériau de support.

6. Procédé selon l'une des revendications 1 à 5, dans lequel le pH lors de la complexation se situe entre 2,5 et 4,0.

7. Utilisation d'un agent complexant présentant un matériau de support sur lequel des sidérophores sont immobilisés de manière covalente par l'intermédiaire d'un lieur,
dans lequel le lieur contient une chaîne de polyéthylène glycol,
dans lequel le lieur présente une masse de 2 000 à 3 500 Da.
pour la récupération d'ions métalliques à partir d'eaux usées industrielles.
